# EUROPEAN PATENT APPLICATION

(11) **EP 1 922 929 A1**
(43) Date of publication of application: **21.05.2008**
(21) Application number: 06018202.9
(22) Date of filing: 31.08.2006
(51) Int. Cl.: A01N 47/38, A01P 7/04, A01N 51/00

(54) **A method of protecting a plant propagation material, a plant, part of a plant and/or plant organ**

(71) Applicant: Syngenta Participations AG, 4058 Basel (CH)
(72) Inventor: The designation of the inventor has not yet been filed

(57) **Abstract**

A method of controlling or preventing damage by one or more soil-dwelling coleopteran pests, such as larvae thereof, in a plant propagation material, a plant, part of a plant and/or plant organ that grow at a later point in time, which comprises applying on the plant propagation material indoxacarb.

## Description

The present invention relates to a method for control or prevention of damage by one or more soil-dwelling coleopteran pests, in particular larvae thereof, in particular on a plant propagation material, on a plant, on part of plant and/or plant organ that grow at a later point in time by applying indoxcarb or pesticidal combinations thereof on the plant propagation material.

The treatment of plant propagation material is a targeted pesticide application which addresses the need for a reduction of environmental and worker exposure compared to foliar or soil pesticide applications.

Pesticidal active ingredients and combinations thereof for controlling pests in plant propagation materials and plant organs that grow at a later point in time are described in the literature. The biological properties of those known compounds and combinations are not entirely satisfactory in the areas of pest control, phytotoxicity, and environmental and worker exposure, for example. ln particular, in the instance a pest has become, or risks becoming resistant to the previously known combinations, improved methods of control or prevention are sought.

Damage caused by soil dwelling pests, such as corn rootworms, wireworms, false wireworms and white grubs is not always immediately visible because they attack the plant material underground.

For example, corn rootworms (*Diabrotica* spp.) are one of the most economically important corn insects. Methods of managing this include crop rotation away from corn for one year is a highly effective nonchemical control practice for corn rootworms; transgenic corn hybrids with resistance to larval rootworm feeding; biological control with natural enemies such as other insects, mites, nematodes and fungi; and chemical treatment at time of planting with certain insecticies or as seed treatment.

There is a continuing need to provide pesticidal solutions, which provide improved, for example, biological properties, especially for controlling pests.

It has now been found that indoxacarb has unexpectedly good activity when applied onto a plant propagation material, particularly against soil-dwelling coleopteran pests, *such as Diabrotica* spp., Agriotes lineatus, Agriotes obscurus, Limonius californicus, Limonius infuscatus, Conoderus amplicollis, Conoderus falli, Melanotus communis, Somaticus spp., Gonocephalum spp., Melolontha melolontha, Holotrichia serrata, Phyllophaga spp.

Accordingly, in a first aspect, the present invention provides a method of controlling or preventing damage by one or more soil-dwelling coleopteran pests, such as larvae thereof, on a plant propagation material, a plant, part of a plant and/or plant organ that grow at a later point in time, which comprises applying on the plant propagation material indoxacarb.

In a second aspect, the present invention provides a method of protecting a plant propagation material, a plant, part of a plant and/or plant organ that grow at a later point in time against one or more soil-dwelling coleopteran pests' damage which comprises applying on the plant propagation material indoxacarb.

The present invention also relates to a method which comprises (i) treating a plant propagation material, such as a seed, with indoxacarb, and (ii) planting or sowing the treated propagation material, wherein the treatment protects against one or more soil-dwelling coleopteran pests' damage of the treated plant propagation material, plant, part of plant and/or plant organ that grow at a later point in time.

Further, the present invention concerns a method which comprises (i) treating a plant propagation material, such as a seed, with indoxacarb, and (ii) planting or sowing the treated propagation material, and (iii) achieving protection against one or more soil-dwelling coleopteran pests' damage of the treated plant propagation material, plant, part of plant and/or plant organ that grow at a later point in time.

In a further aspect of the invention, indoxacarb, one or more pesticides selected from additional insecticides, fungicides and nematicides, and one or more customary formulation auxilaries are present in the form of a plant propagation material, preferably seed, treatment composition.

In an embodiment of each aspect, a combination comprising indoxacarb and one or more pesticides are applied on the plant propagation material, in any desired sequence or simultaneously.

When indoxacarb is used in combination with one or more pesticides on a plant propagation material, a synergistically enhanced activity is observed.

The enhanced activity can be for example the unexpected enhanced action resulting in lower pathogenic damage and/or pest damage, lower rates of application, or a longer duration of action. In the instance of agriculture, the enhanced action is found to show an improvement in the growing characteristics of a plant by, for example, higher than expected control of the pathogenic infestation and/or pest damage, such as *Diabrotica* spp.

The improvement in the growing (or growth) characteristics of a plant can manifest in a number of different ways, but ultimately it results in a better product of the plant. It can, for example, manifest in improving the yield and/or vigour of the plant or quality of the harvested product from the plant, which improvement may not be connected to the control of diseases and/or pests.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1%, even more preferred is about 2%, and yet more preferred is about 4%, or more. Yield can be expressed in terms of an amount by weight or volume of a product of the plant on some basis. The basis can be expressed in terms of time, growing area, weights of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

The activity of indoxacarb is particularly effective against the larvae of the soil-dwelling coleopteran pests.

The present invention is especially suitable for Diabrotica insects, and particularly corn rootworm larvae. Examples are Diabrotica spp. (Western, Southern and Northern corn rootworm), for example, D. balteata, D. virgifera, D. undecimpunctata, and D. longicornis.

Controlling, preventing or protecting and its inflections, within the context of the present invention, mean reducing any undesired effect, such as
- pathogenic, such as phytopathogenic, especially fungi, infestation or attack of, and
- pathogenic damage or pest damage on,
a plant, part of the plant, plant organs or plant propagation material to such a level that an improvement is demonstrated.

Indoxacarb and pesticidal combinations thereof can be formulated for a particular use. Preferably, indoxacarb and combination thereof can be formulated for protecting plant propagation materials. Advantageously, the indoxacarb and pesticidal combinations thereof are formulated for plant propagation material, preferably seed, treatment applications for controlling or preventing damage by pests, which are found in agriculture and forestry, and can particularly damage the plant in the early stages of its development.

Further, the present invention also envisages soil application of indoxacarb or a pesticidal combination to control one or more soil-dwelling coleopteran pests. Methods of applying to the soil can be via any suitable method, which ensures that indoxacarb or a pesticidal combination thereof penetrates the soil, for example, nursery tray application, in furrow application, soil drenching, soil injection, drip irrigation, application through sprinklers or central pivot, incorporation into soil (broad cast or in band) are such methods. Accordingly, in an aspect, the present invention provides a method of controlling or preventing damage by one or more soil-dwelling coleopteran pests in a plant propagation material, a plant, parts of a plant and/or plant organs that grow at a later point in time, which comprises applying to the locus of the plant propagation material indoxacarb. The application to the locus can be before planting or sowing, during planting or sowing, after planting or sowing, or any combination thereof.

The benefit from the invention can also be achieved either by (i) treating plant propagation material with indoxacarb or a pesticidal combinaton thereof or (ii) applying to the locus where control is desired, generally the planting site, indoxacarb or a pesticidal combinaton thereof, or both (i) and (ii).

The term "plant propagation material" is understood to denote all the generative parts of the plant, such as seeds, which can be used for the multiplication of the latter and vegetative plant material such as cuttings and tubers (for example, potatoes). There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion, for example, of their roots.

Part of plant and plant organ that grow at later point in time are any sections of a plant that develop from a plant propagation material, such as a seed. Part of plant, plant organ, and plant can also benefit from the pathogenic and/or pest damage protection achieved by the application of indoxacarb or a pesticidal combination thereof on to the plant propagation material. In an embodiment, certain part of plant and certain plant organ that grow at later point in time can also be considered as plant propagation material, which can themselves be applied (or treated) with indoxacarb or a pesticidal combination thereof; and consequently, the plant, further part of the plant and further plant organ that develop from the treated part of plant and treated plant organ can also benefit from the pathogenic and/or pest damage protection achieved by the application of indoxacarb or a pesticidal combination thereof on to the certain part of plant and certain plant organ.

Methods for applying or treating pesticidal active ingredient(s) and mixtures thereof on to plant propagation material, especially seeds, are known in the art, and include dressing, coating, pelleting and soaking application methods of the propagation material.

The active ingredients can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In a preferred embodiment, the combination is applied or treated on to the plant propagation material by a method such that the germination is not induced; generally seed soaking induces germination because the moisture content of the resulting seed is too high. Accordingly, examples of suitable methods for applying (or treating) a plant propagation material, such as a seed, is seed dressing, seed coating or seed pelleting and alike.

It is preferred that the plant propagation material is a seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the active ingredients and adherence thereof to the seeds is desired during propagation material treatment. Treatment could vary from a thin film (dressing) of the formulation containing the active ingredient(s) on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with, for example, the combination. In particular, seed coating or seed pelleting are preferred in the treatment of, for example, the combinations, according to the invention. As a result of the treatment, the active ingredient(s) are adhered on to the seed and therefore available for pest and/or disease control.

The treated seeds can be stored, handled, sowed and tilled in the same manner as any other active ingredient treated seed.

The present invention is suitable for plants of the crops: cereals (wheat, barley, rye, oats, corn, rice, sorghum, triticale and related crops); beet (sugar beet and fodder beet); leguminous plants (beans, lentils, peas, soybeans); oil plants (rape, mustard, sunflowers); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broad-leaved trees and evergreens, such as conifers). Especially suitable are wheat, barley, rye, oats, corn and soybean, triticale, in particular corn (or maize).

Suitable target crops also include transgenic crop plants of the foregoing types. The transgenic crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878 and are incorporated by reference in the present application.

The rates of application (use) of indoxacarb alone or in combination with one or more pesticides vary, for example, according to type of crop, the specific active ingredients in the combination, type of plant propagation material but is such that the active ingredients in the combination is an effective amount to provide the desired enhanced action (such as *Diabrotica* spp. control) and can be determined by trials.

Generally for seed treatment, application rates can vary from 0.5 to 1000g /100kg of seeds of active ingredients.

Suitable seed treatment application rates of indoxacarb tend to be 1 - 500, preferably 10 - 400, more preferably 30 - 300, /100kg of seeds, and if one or pesticides are also present, then rates tend to 1-1000, preferably 2-950 more preferably 2 - 800, g/100kg of seeds of any other pesticides.

In the instance a pesticide is used in combination with indoxacarb, the weight ratio with a pesticide is selected as to give the desired, for example, synergistic, action. In general, the weight ratio would vary depending on the specific pesticide and how many pesticides are present in the combination. Generally, the weight ratio of any two active ingredients is from 100:1 to 1:100, preferably from 75:1 to 1:75, more preferably, 50:1 to 1.50, especially 25:1 to 1:25, advantageously 10:1 to 1:10.

The plant propagation material treated by indoxacarb or combination thereof is, therefore, resistant to damage, especially against one or more soil-dwelling coleopteran pests; accordingly, the present invention also provides one or more soil-dwelling coleopteran pests resistant plant propagation material which is treated with indoxacarb or the combination thereof and consequently at least the active ingredient(s) are adhered on the propagation material, such as seed.

The plant propropation material may be applied together and/or sequentially with further active compounds. These further compounds can be other pesticidal active ingredients, fertilizers or micronutrient donors or other preparations that influence plant growth, such as inoculants, plant inducers (e.g. nod factors).

The one or more pesticides selected from additional insecticides, fungicides and nematicides can be applied on the propagation material in combination with indoxacarb, either in any desired sequence or simultaneously.

In the event there are more than two pesticides in combination with indoxacarb, the two or more pesticides can be applied in any desired sequence or simultaneously in combination with the indoxacarb. Preferably, the indoxacarb and pesticides are applied simultaneously.

A single pesticidal active ingredient may have activity in more than one area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

Examples of pesticides include fungicides, bactericides, insecticides, acaricides and nematicides, for example, triazole derivatives, strobilurins, carbamate (including thiocarbamate), benzimidazoles (thiabendazole), N-trihalomethylthio compounds (captan), substituted benzenes, carboxamides, phenylamides and phenylpyrroles, and mixtures thereof; and neonicotinoids, avermectin and derivatives thereof, carbamates and pyrethroids.

In an embodiment, the insecticide is a neonicotinoid, such as thiamethoxam, imidacloprid, clothianidin, thiacloprid, acetamiprid, dinotefuran or nitenpyram.

A preferred pesticide for use in combination with indoxacarb is one or more insecticides, such as thiamethoxam, imidacloprid, clothianidin, lamda-cyhalothrin, tefluthrin, β-cyfluthrin, permethrin, abamectin, fipronil, and spinosad; especially preferred are neonicotinoids, such as thiamethoxam, imidacloprid and clothianidin.

A preferred ratio by mass between indoxacarb and thiamethoxam is from 1:10 to 10:1, preferably from 1:5 to 5:1, more preferably from 1:2.5 to 2.5:1, especially from 1:1.5 to 1.5:1.

Indoxacarb and pesticidal combination thereof may be used either in pure form, i.e., as a solid active ingredient, for example, in a specific particle size, or preferably together with at least one of the auxiliary (also known as adjuvants) customary in formulation technology, such as extenders, e.g., solvents or solid carriers, or surface-active compounds (surfactants), in the form of a formulation, in the present invention. Generally, the active ingredient(s) are in the form of a formulation composition with one or more of customary formulation auxiliaries.

Therefore, in the instance indoxacarb is applied in combination with one or more pesticides the active ingredients making-up the combination can be applied to the locus (e.g., at the planting site, on the plant propagation material) where control is desired either simultaneously or in succession at short interval, for example on the same day, if desired together with further carriers, surfactants or other application-promoting adjuvants customarily employed in formulation technology. In a preferred embodiment, the combination is applied simultaneously.

In the event combination is applied simultaneously in the present invention, they may be applied as a composition, in which case indoxacarb and the pesticide(s) can be obtained from a separate formulation source and mixed together (known as a tank-mix, ready-to-apply, spray broth, or slurry), optionally with other active compounds (such as micronutrients, inoculants), or they can be obtained as single formulation mixture source (known as a pre-mix, concentrate, formulated compound (or product)), and optionally mixed together with other active compounds (such as micronutrients, inoculants).

In an embodiment, the combination of the present invention is applied as a composition.

In a preferred embodiment of the invention, the composition is a pre-mix composition (or mixture).

Alternative to the actual synergistic action with respect to pesticidal activity, the combinations according to the invention also have surprising advantageous properties which can also be described, in a wider sense, as synergistic activity. Examples of such advantageous properties that may be mentioned are: advantageous behaviour during formulation and/or upon application, for example upon grinding, sieving, emulsifying, dissolving or dispensing; increased storage stability; improved stability to light; more advantageous degradability; improved toxicological and/or ecotoxicological behaviour; or any other advantages familiar to a person skilled in the art.

Examples of seed treatment formulation types for pre-mix compositions are:
WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

The tank-mix compositions are generally prepared by diluting with a solvent (for example, water) the one or more pre-mix compositions containing different pesticides, and optionally further auxiliaries.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

The formulations are prepared in known manner, e.g., by homogeneously mixing and/or grinding the active ingredients with extenders, e.g., solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g., for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g., especially dolomite or pulverized plant residues.

Depending upon the nature of the active ingredient compounds to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g., phosphatidylethanolamine, phosphatidylserine, phosphatidylglycerol and lysolecithin.

Normally, a tank-mix formulation for seed treatment application comprises 0.25 to 80%, especially 1 to 75 %, active ingredient compounds, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, active ingredient compounds, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred seed treatment pre-mix formulations are aqueous suspension concentrates. The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In general, the pre-mix compositions of the invention contain 0.5 to 99.9 especially 1 to 95, advantageously 1 to 50 , %, by mass of active ingredient compound(s), and 99.5 to 0.1, especially 99 to 5, %, by mass of a solid or liquid adjuvant (including, for example, a solvent such as water), where the auxiliaries (or adjuvant) can be a surfactant in an amount of 0 to 50, especially 0.5 to 40, %, by mass based on the mass of the pre-mix formulation.

A preferred embodiment is a plant propagation material treating (or protecting) composition, wherein said plant propagation material protecting composition comprises additionally a colouring agent. The plant propagation material protecting composition or mixture may also comprise at least one polymer from water-soluble and water-dispersible film-forming polymers that improve the adherence of the active ingredients to the treated plant propagation material, which polymer generally has an average molecular weight of at least 10,000 to about 100,000.

The Examples which follow serve to illustrate formulations according to the invention, "active ingredient" denoting indoxacarb or a combination thereof with another pesticide(s).

### Formulation Examples

| Wettable powders | a) | b) | c) |
|---|---|---|---|
| active ingredient | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether | - | 2 % | - |
| (7-8 mol of ethylene oxide) | | | |
| highly dispersed silicic acid | 5 % | 10 % | 10 % |
| Kaolin | 62 % | 27 % | - |

The active ingredient is thoroughly mixed with the adjuvants and the mixture is thoroughly ground in a suitable mill, affording wettable powders that can be diluted with water to give suspensions of the desired concentration.

| Powders for drv seed treatment | a) | b) | c) |
|---|---|---|---|
| active ingredient | 25 % | 50 % | 75 % |
| light mineral oil | 5 % | 5 % | 5 % |
| highly dispersed silicic acid | 5 % | 5 % | - |
| Kaolin | 65 % | 40 % | - |
| Talcum | - | | 20 |

The active ingredient is thoroughly mixed with the adjuvants and the mixture is thoroughly ground in a suitable mill, affording powders that can be used directly for seed treatment.

| Emulsifiable concentrate | |
|---|---|
| active ingredient | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| Active ingredient | 5 % | 6 % | 4 % |
| Talcum | 95% | - | - |
| Kaolin | - | 94 % | - |
| mineral filler | - | - | 96 % |

Ready-for-use dusts are obtained by mixing the active ingredient with the carrier and grinding the mixture in a suitable mill. Such powders can also be used for dry dressings for seed.

### Extruder granules

| | |
|---|---|
| Active ingredient | 15 % |
| sodium lignosulfonate | 2 % |
| carboxymethylcellulose | 1 % |
| Kaolin | 82 % |

The active ingredient is mixed and ground with the adjuvants, and the mixture is moistened with water. The mixture is extruded and then dried in a stream of air.

### Coated granules

| | |
|---|---|
| Active ingredient | 8 % |
| polyethylene glycol (mol. wt. 200) | 3 % |
| Kaolin | 89 % |

The finely ground active ingredient is uniformly applied, in a mixer, to the kaolin moistened with polyethylene glycol. Non-dusty coated granules are obtained in this manner.

### Suspension concentrate

| | |
|---|---|
| active ingredient | 40 % |
| propylene glycol | 10 % |
| nonylphenol polyethylene glycol ether (15 mol of ethylene oxide) | 6 % |
| Sodium lignosulfonate | 10 % |
| Carboxymethylcellulose | 1 % |
| silicone oil (in the form of a 75 % emulsion in water) | 1 % |
| Water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

### Flowable concentrate for seed treatment

| | |
|---|---|
| active ingredient | 40 % |
| propylene glycol | 5 % |
| copolymer butanol PO/EO | 2 % |
| tristyrenephenole with 10-20 moles EO | 2 % |
| 1,2-benzisothiazolin-3-one (in the form of a 20% solution in water) | 0.5 % |
| monoazo-pigment calcium salt | 5 % |
| Silicone oil (in the form of a 75 % emulsion in water) | 0.2 % |
| Water | 45.3 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

In a preferred embodiment, indoxacarb or a pesticidal combination thereof is a plant propagation material, preferably seed, treating pre-mix composition.

Using such formulations either straight or diluted plant propagation material can be treated and protected against damage, for example, from pests and/or pathogen(s), by, for example, spraying, pouring or immersing.

The formulations of indoxacarb and combinations thereof are distinguished by the fact that they are especially well tolerated by plants and are environmentally friendly.

In an embodiment, the indoxacarb or pesticidal combinations thereof can also be used to treat stored products, such as grain, for protection against pathogens and/or pests.

In each aspect and embodiment of the invention, "consisting essentially" and inflections thereof are a preferred embodiment of "comprising" and its inflections, and "consisting of" and inflections thereof are a preferred embodiment of "consisting essentially of" and its inflections.

Use of a term in a singular form also encompasses that term in plural form and vice a versa.

A description of the structure of indoxacarb as well as the structures of other pesticides (*e.g.,* fungicides, insecticides, nematicides) can be found in the e-Pesticide Manual, version 3.1, 13th Edition, Ed. CDC Tomlin, British Crop Protection Council, 2004-05.

The following Examples are given by way of illustration and not by way of limitation of the invention.

### Biological Examples

### Example 1

Maize seeds are treated with indoxacarb at rate of 0.01, 0.03, 0.1, and 0.3 mg a.i. /seed. The seeds are sown into 9-cm pots filled with 280 mL of soil. After placing the seeds on the soil surface they are covered with 50 mL of soil. Before and during the bioassays, the plants are grown in greenhouse chambers at 25 °C during daytime, 23 °C during night, 50-60 % rH, a 14-hour photoperiod and artificial lighting when natural light fell below 20 kLux. After sowing, the pots are transferred to the greenhouse chambers, set up in a random fashion and are irrigated as necessary from above. After 14 days, the pots are sealed at the bottom by placing them into a plastic Petri dish filled with moist plaster of Paris. The plants are cut back to 15 cm height and covered with an acrylic cylinder. After introducing the test organism (i.e. D. balteata larvae), the cylinders are closed with a plastic mesh at the apex. Each treatment group is replicated 5 times. Each replicate contains 5 plants and 5 larvae. Table below shows the observed corrected mortality of corn root worm larvae to indoxacarb (Abbott W.S. (1925) A method of computing the effectiveness of an insecticide. Journal of Economic Entomology 18: 265-2G7).

**Table: Mortality of corn rootworms exposed to maize plants grown from seeds treated with indoxacarb**

| mg/seed | Observed, % |
|---|---|
| 0.01 | 26.1 |
| 0.03 | 34.8 |
| 0.1 | 43.5 |
| 0.3 | 65.2 |

### Example 2

Maize seeds are also treated with thiamethoxam alone at rate of 0.1 mg a.i. /seed and a mixture of thiamethoxam and indoxacarb at the rates indicated in the Table below. The seeds are sown into 9-cm pots filled with 280 mL of soil. After placing the seeds on the soil surface they are covered with 50 mL of soil. Before and during the bioassays, the plants are grown in greenhouse chambers at 25 °C during daytime, 23 °C during night, 50-60 % rH, a 14-hour photoperiod and artificial lighting when natural light fell below 20 kLux. After sowing, the pots are transferred to the greenhouse chambers, set up in a random fashion and are irrigated as necessary from above. After 14 days, the pots are sealed at the bottom by placing them into a plastic Petri dish filled with moist plaster of Paris. The plants are cut back to 15 cm height and covered with an acrylic cylinder. After introducing the test organism (i.e. D. balteata farvae), the cylinders are closed with a plastic mesh at the apex. Each treatment group is replicated 5 times. Each replicate contains 5 plants and 5 larvae. Table below shows the observed corrected mortality of D. balteata larvae to indoxcarb, thiamethoxam and the combination thereof and the expected mortality for the combination according to Colby (Colby S.R. (1967) Calculating synergistic and antagonistic responses of herbicide combinations. Weeds 15: 20-22).

**Table: Observed & Expected mortality (%) of corn rootworms exposed to maize plants grown from seeds treated with thiamethoxam and indoxacarb**

| Thiamethoxam, mg/seed | Indoxacarb, mg/seed | Observed, % | Expected, % |
|---|---|---|---|
| 0.1 | 0 | 43.5 | |
| 0 | 0.01 | 26.1 | |
| 0 | 0.03 | 34.8 | |
| 0 | 0.1 | 43.5 | |
| 0 | 0.3 | 65.2 | |
| 0.1 | 0.01 | 82.6 | 58.2 |
| 0.1 | 0.03 | 69.6 | 63.1 |
| 0.1 | 0.1 | 91.3 | 68.1 |
| 0.1 | 0.3 | 82.6 | 80.3 |

## Claims

1. A method of controlling or preventing damage by one or more soil-dwelling coleopteran pests, such as larvae thereof, on a plant propagation material, a plant, part of a plant and/or plant organ that grow at a later point in time, which comprises applying on the plant propagation material indoxacarb.

2. The method according to claim 1 wherein the pest is one or more of *Diabrotica spp.* Agriotes lineatus, Agriotes obscurus, Limonius californicus, Limonius infuscatus, Conoderus amplicollis, Conoderus falli, Melanotus communis, Somaticus geniculatus, Gonocephalum spp., Meloiontha melolontha, Holotrichia serrata, Phyllophaga spp.

3. The method according to claim 2 wherein the pest is *Diabrotica* is one or more of D. balteata, D. virgifera, D. undecimpunctata, and D. longicornis.

4. The method according to claim 3 wherein the pest is *Diabrotica* balteata, preferably larvae thereof.

5. The method according to any one of claims 1 to 4 wherein one or more pesticides selected from additional insecticides, fungicides and nematicides are applied on the propagation material in combination with indoxacarb, either in any desired sequence or simultaneously.

6. The method according to claim 4 wherein the pesticide is a neonicotinoid.

7. The method according to claim 6, wherein the neonicotinoid is thiamethoxam, imidacloprid, clothianidin, thiacloprid, acetamiprid, dinotefuran or nitenpyram.

8. The method according to any one of the preceding claims which comprises indoxacarb and thiamethoxam, either in any desired sequence or simultaneously, being applied on the plant propagation material.

9. The method according to claim 8 wherein indoxacarb and thiamethoxam is in the form of a composition.

10. The method according to any one of claims 1 to 9 wherein the plant propagation material is for a plant of the crop of cereals, beets, leguminous plants, oil plants, cucumber plants, fibre plants, vegetables, or ornamentals.

11. A method of protecting a plant propagation material, a plant, part of a plant and/or plant organ that grow at a later point in time against damage by one or more soil-dwelling coleopteran pests, such as larvae thereof, which comprises applying on the plant propagation material indoxacarb.

12. The method according to any one of claims 1 to 11, wherein the plant propagation material is a seed.

13. A plant propagation material treatment composition comprising indoxacarb, one or more pesticides selected from additional insecticides, fungicides and nematicides, and one or more customary formulation auxilaries.

14. The composition according to claim 13 wherein pesticide is a neonicotinoid.

15. A plant propagation material treated with the composition defined in claims 13 and 14.

16. A method of controlling or preventing damage one or more soil-dwelling coleopteran pests, such as larvae thereof, in a plant propagation material, a plant, part of a plant and/or plant organ that grow at a later point in time, which comprises applying to the locus of the plant propagation material indoxacarb.
